# EUROPÄISCHE PATENTSCHRIFT

(11) **EP 0 417 336 B1**
(45) Veröffentlichungstag und Bekanntmachung des Hinweises auf die Patenterteilung: **11.05.1994**
(21) Anmeldenummer: 89116806.4
(22) Anmeldetag: 11.09.1989
(51) Int. Cl.: H04Q 3/52, H03K 17/693

(54) **Breitbandsignal-Koppeleinrichtung**
Switching device for broad-band signals
Dispositif de commutation pour signaux à large bande

(43) Veröffentlichungstag der Anmeldung: 20.03.1991
(73) Patentinhaber: SIEMENS AKTIENGESELLSCHAFT, 80333 München (DE)
(72) Erfinder: Trumpp, Gerhard, Dipl.-Ing., D-8039 Puchheim (DE); Wolkenhauer, Jan, Dipl.-Ing., D-8000 München (DE)

(56) Entgegenhaltungen:
- EP-A- 0 238 834
- EP-A- 0 249 837
- EP-A- 0 262 479
- EP-A- 0 264 046

## Beschreibung

Läßt sich die ECL-Technik durch Eigenschaften wie hohe Arbeitsgeschwindigkeit, (mittel-)hoher Integrationsgrad und (mittel-) hohe Verlustleistung charakterisieren, so zeichnet sich die FET-Technik - bei demgegenüber allerdings nur mittleren Arbeitsgeschwindigkeiten - durch einen sehr hohen Integrationsgrad und sehr niedrige Verlustleistungen aus. Diese letzteren Eigenschaften führen zu dem Bemühen, mit integrierten Schaltungen in FET-Technik auch in bislang der Bipolar-Technik vorbehaltene Geschwindigkeitsbereiche vorzudringen.

Für eine Breitbandsignal-Koppeleinrichtung mit einer Koppelpunktmatrix, die jeweils mit zwei Signalleitern gebildete Matrixeingangsleitungen aufweist, welche einerseits jeweils an zwei Differenz-(Komplementär-)ausgänge einer Eingangsdigitalsignalschaltung angeschlossen sind und andererseits über Koppelpunkte mit ebenfalls jeweils mit zwei Signalleitern gebildeten Matrixausgangsleitungen verbindbar sind, welche jeweils mit ihren beiden Signalleitern zu den beiden Signaleingängen einer mit einem Differenzverstärker gebildeten Ausgangsverstärkerschaltung führen, ist in diesem Zusammenhang (aus EP-A-0 264 046) eine in FET-Technik ausgebildete Koppelpunktmatrix mit in den Koppelpunkten vorgesehenen, jeweils mit zwei jeweils an der Steuerelektrode mit einem Durchschalte-bzw. Sperrsignal beaufschlagten Schalter-Transistoren gebildeten Koppelelementpaaren bekannt, deren Schalter-Transistoren jeweils mit einer Hauptelektrode an den einen bzw. anderen Signalleiter der zugehörigen Matrixausgangsleitung angeschlossen sind, die ihrerseits mit einem Ausgangs-Differenzverstärker mit Kippverhalten versehen ist, wobei die Koppelelementpaare jeweils zwei jeweils mit einem Schalter-Transistor eine Serienschaltung bildende Vorschalt-Transistoren aufweisen,
die jeweils mit der Steuerelektrode an den einen bzw. den anderen Signalleiter der zugehörigen Matrixeingangsleitung angeschlossen sind und deren jeweilige der Serienschaltung abgewandte Hauptelektrode über einen Abtast-Transistor mit dem einen Anschluß (Masse) der Betriebsspannungsquelle verbunden ist, mit deren anderen Anschluß jeder Signalleiter der jeweiligen Matrixausgangsleitung jeweils über einen Vorlade-Transistor verbunden ist,
und wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden.

Diese bekannte Breitbandsignal-Koppeleinrichtung bringt zusätzlich zu den Vorteilen, die mit einer in FET-Technik gehaltenen Koppelpunktmatrix verbunden sind, den weiteren Vorteil mit sich, daß einerseits - bei gesperrtem Koppelpunkt - auch ohne zusätzliche Dämpfungsmaßnahmen keine störende Signale über den Koppelpunkt zum Matrixausgang gelangen und daß andererseits - bei leitendem Koppelpunkt - bei der eigentlichen Bitdurchschaltung ggf. stattfindende Umladungen der Matrixausgangsleitung stets von dem dem einen Signalzustand entsprechenden einen Betriebspotential ausgehend in nur einer Umladerichtung vor sich gehen und somit bereits mit einer (dem Überschreiten einer diesem Betriebspotentialwert benachbarten, dem Kippunkt des Differenzverstärkers entsprechenden Schwelle entsprechenden) kleinen Umladung - und damit entsprechend schnell - ein eindeutiger Übergang des am Ausgang der Koppeleinrichtung auftretenden, durchgeschalteten Digitalsignals von dem einen in den anderen Signalzustand verbunden ist.

Bei einer solchen Breitbandsignal-Koppeleinrichtung kann eine weitere Erhöhung der Arbeitsgeschwindigkeit dadurch ermöglicht werden, daß die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist (EP-A-0 345 623, veröffentlicht am 13.12.89); dies bringt in Verbindung mit dem Vorteil einer Beschleunigung der Vorladung der Matrixausgangsleitungen den weiteren Vorteil einer sehr frühzeitigen Potentialsymmetrierung der Matrixausgangsleitungen mit sich, so daß auch entsprechend frühzeitig die Anfangsbedingungen für eine sichere Verstärkung durch einen nachfolgenden Differenzverstärker gegeben sind.

Eine weitere Erhöhung der Arbeitsgeschwindigkeit der Breitbandsignal-Koppeleinrichtung erhält man, wenn neben einem matrixeingangsleitungs-individuellen Abtast-Transistor ein matrixeingangsleitungs-individueller Vorlade-Transistor oder, alternativ dazu, neben einem matrixausgangsleitungs-individuellen Abtast-Transistor ein matrixausgangsleitungs-individueller Vorlade-Transistor vorgesehen ist (EP-A-0 345 623).

Die hinsichtlich Verlustleistungsbedarf und Arbeitsgeschwindigkeit erreichbaren Vorteile einer solchen bekannten Breitband-Koppeleinrichtung, die jeweils mit zwei Signalleitern gebildete Matrixeingangsleitungen aufweist, sind mit einem entsprechenden Platzbedarf für solche jeweils zwei Signalleiter der Matrixeingangsleitungen verbunden.

Die Erfindung stellt sich die Aufgabe, eine Breitbandsignal-Koppeleinrichtung in FET-Technik anzugeben, die gegenüber den aus dem Stand der Technik bekannten Breitbandsignal-Koppeleinrichtungen einen merklich verringerten Platzbedarf aufweist.

In diesem Zusammenhang ist bereits eine Breitbandsignal-Koppeleinrichtung mit einer Koppelpunktmatrix in FET-Technik vorgeschlagen worden (EP-A-0 388 856, veröffentlicht am 26.09.90), deren Matrixeingangsleitungen über jeweils mit Koppelelementpaaren gebildete Koppelpunkte mit jeweils mit zwei Signalleitern gebildeten Matrixausgangsleitungen verbindbar sind, an deren beiden Signalleiter jeweils die beiden Signaleingänge einer mit einem Differenzverstärker mit Kippverhalten gebildeten Ausgangsverstärkerschaltung anschließbar sind, wobei die Koppelelementpaare jeweils mit zwei jeweils an der Steuerelektrode mit einem Durchschalte- bzw. Sperrsignal beaufschlagten und mit einer Hauptelektrode an den einen bzw. anderen Signalleiter der zugehörigen Matrixausgangsleitung angeschlossenen Schalter-Transistoren und zwei jeweils mit einem Schalter-Transistor eine Serienschaltung bildenden Vorschalt-Transistor gebildet sind,
die jeweils mit der Steuerelektrode an einen Signalleiter der zugehörigen Matrixeingangsleitung angeschlossen sind und deren jeweilige der Serienschaltung abgewandte Hauptelektrode über einen koppelelement-, matrixeingangsleitungs- oder matrixausgangsleitungs-individuellen Abtast-Transistor mit dem einen Anschluß der Betriebsspannungsquelle verbunden ist, mit deren anderen Anschluß jeder Signalleiter der jeweiligen Matrixausgangsleitung jeweils über einen Vorlade-Transistor verbunden ist,
wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden,
und wobei die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist; diese Breitbandsignal-Koppeleinrichtung ist erfindungsgemäß dadurch gekennzeichnet, daß die Koppelelementpaare jeweils zwei Vorschalt-Transistoren unterschiedlichen Kanaltyps aufweisen, die mit ihrer Steuerelektrode an ein und denselben Signalleiter der zugehörigen Matrixeingangsleitung angeschlossen sind.

Die Erfindung zeigt demgegenüber einen anderen Lösungsweg. Die Erfindung betrifft eine Breitbandsignal-Koppeleinrichtung mit einer Koppelpunktmatrix in FET-Technik, deren jeweils mit einem Signalleiter gebildete Matrix-Eingangsleitungen über jeweils mit Koppelelementen gebildete Koppelpunkte mit jeweils mit zwei Signalleitern gebildeten Matrix-Ausgangsleitungen verbindbar sind, an deren beiden Signalleiter jeweils die beiden Signaleingänge einer mit einem Differenzverstärker gebildeten Ausgangsverstärkerschaltung angeschlossen sind, wobei die Koppelemente jeweils mit einem an der Steuerelektrode mit einem Durchschalte- bzw. Sperrsignal beaufschlagten und mit einer Hauptelektrode an den einen bzw. anderen Signalleiter der zugehörigen Matrixausgangsleitung angeschlossenen Schaltertransistor und einem mit dem Schaltertransistor eine Serienschaltung bildenden Eingangs-Transistor gebildet sind, der mit der Steuerelektrode an den Signalleiter der zugehörigen Matrix-Eingangsleitung angeschlossen ist und dessen der Serienschaltung abgewandte Hauptelektrode mit einem Anschluß der Betriebsspannungsquelle verbunden ist und wobei die Signalleiter der jeweiligen Matrix-Ausgangsleitung jeweils über einen Vorladetransistor, der an seiner Steuerelektrode mit einem eine Bit-Durchschaltezeitspanne in eine Vorladephase und eine eigentliche Durchschaltephase unterteilenden Taktsignal beaufschlagt wird, jeweils mit einem Anschluß der Betriebsspannungsquelle verbindbar sind, so daß in jeder Vorladephase die Signalleiter der Matrixausgangsleitung über die jeweiligen Vorladetransistoren auf ein zwischen den Potentialen der Betriebsspannungsquelle liegendes Vorladepotential oder auch auf eines der Betriebspotentiale selbst aufladbar sind. Diese Breitbandsignal-Koppeleinrichtung ist erfindungsgemäß dadurch gekennzeichnet, daß die der Serienschaltung abgewandte Hauptelektrode des Eingangstransistors des mit dem einen Signalleiter verbundenen Koppelelementes mit dem das hohe Potential aufweisenden Anschluß der Betriebsspannungsquelle verbindbar ist und die der Serienschaltung abgewandte Hauptelektrode des Eingangstransistors des mit dem anderen Signalleiter verbundenen Koppelelementes mit dem das niedrige Potential aufweisenden Anschluß der Betriebsspannungsquelle verbindbar ist.

Die Erfindung bringt den Vorteil mit sich, je Matrixeingangsleitung nur einen einzigen Signalleiter - mit entsprechend verringertem Platzbedarf und verringertem Leistungsverbrauch - zu benötigen, zugleich aber die sonstigen Besonderheiten und vorteilhaften Eigenschaften der eingangs erwähnten bekannten Breitband-Koppeleinrichtung beizubehalten.

Bei der erfindungsgemäßen Breitbandsignal-Koppeleinrichtung kommt es nur bei der Durchschaltung des einen Signalzustandes zu einer Potentialzustandsänderung auf den Signalleitern der betreffenden Matrix-Ausgangsleitung, wobei sich auf den Signalleitern die Potentiale in entgegengesetzte Richtungen ändern, so daß ein für eine sichere Ausgangsentscheidung notwendiger Potentialunterschied schneller erreicht wird und somit eine höhere Übertragungsgeschwindigkeit ermöglicht wird. Da jeweils nur diejenigen Matrix-Ausgangsleitungen in der Vorladephase nachgeladen werden müssen, die in der vorangegangenen Hauptphase eine Potentialzustandsänderung erfahren haben, ergibt sich eine nochmalige Verringerung der Leistungsaufnahme gegenüber der bekannten Breitbandsignal-Koppeleinrichtung. Dadurch, daß es bei der Durchschaltung des einen Signalzustandes, bei dem eine Potentialzustandsänderung auf der betreffenden Matrix-Ausgangsleitung erfolgt, zunächst zu einer Aufladung des einen Signalleiters und in der darauffolgenden Vorladephase zu einer Aufladung des anderen Signalleiters kommt, führt dies zu einer Vergleichmäßigung der Leistungsaufnahme aus der speisenden Betriebsspannungsquelle. Der Anschluß der Koppelelemente an die Betriebsspannungsquelle kann vorteilhafterweise an die ohnehin schon für die Versorgung der Haltespeicherzellen in jedem Koppelpunkt vorgesehenen Versorgungsleitungen erfolgen.

Eine besonders einfache Herstellbarkeit ergibt sich, wenn in den Koppelelementen Transistoren vom gleichen Transistortyp zum Einsatz kommen.

Ein besonders platzsparender Aufbau der Breitbandsignal-Koppeleinrichtung wird dann erreicht, wenn in den Koppelelementen Transistoren vom n-Kanal-Typ zum Einsatz kommen.

Alternativ zu der vorstehenden Ausführungsform kann aber auch der Schaltertransistor des einen Koppelelementes, das mit dem das höhere Potential aufweisenden Anschluß der Betriebsspannungsquelle verbunden ist vom p-Kanal-Typ sein, wohingegen die übrigen Transistoren der Koppelelemente vom n-Kanal-Typ sind. Durch diese Maßnahme wird der Spannungsabfall an den leitend geschalteten Koppelelementen, die mit dem das höhrere Potential aufweisenden Anschluß der Betriebsspannungsquelle verbunden sind, besonders niedrig.

In weiterer Ausgestaltung der Erfindung ist der genannte eine Signalleiter der jeweiligen Matrix-Ausgangsleitung über den zugehörigen Vorladetransistor mit dem das niedrige Potential aufweisenden Anschluß der Betriebsspannungsquelle verbindbar, wohingegen der genannte andere Signalleiter der jeweiligen Matrix-Ausgangsleitung über den zugehörigen Vorladetransistor mit dem das hohe Potential aufweisenden Anschluß der Betriebsspannungsquelle verbindbar ist. Durch diese Maßnahmen können die jeweiligen Signalleiter der Matrix-Ausgangsleitungen auf jeweils unterschiedliche Vorladepotentiale aufgeladen werden, so daß die an die jeweiligen Matrix-Ausgangsleitungen angeschlossenen Ausgangsverstärkerschaltungen keine Kippcharakteristik aufweisen müssen um bei Nichtschalten der mit der betreffenden Matrix-Ausgangsleitung verbundenen Koppelelemente in der Hauptphase der Bit-Durchschaltezeitspanne in dem während der Vorladephase eingenommenen Grundzustand zu verbleiben.

In weiterer Ausgestaltung der Erfindung kommen für die Vorladetransistoren Transistoren vom n-Kanal-Typ zum Einsatz, die an ihren Steuerelektroden mit dem Taktsignal beaufschlagt werden. Neben der leichten Herstellbarkeit und dem geringen Platzbedarf bringt diese Maßnahme den Vorteil mit sich, daß für sämliche Vorlade-Transistoren lediglich eine Taktsignalleitung benötigt wird.

Weitere Besonderheiten der Erfindung werden aus der nachfolgenden näheren Erläuterung der Erfindung anhand der Zeichnung ersichtlich. Dabei zeigen
- FIG 1: das Schema einer Breitbandsignal-Koppeleinrichtung gemäß der Erfindung,
- FIG 2 und FIG 3: zeigen Beispiele der schaltungstechnischen Realisierung ihrer Koppelpunkte,
- FIG 4: zeigt ein Beispiel der schaltungstechnischen Realisierung einer Halte-Speicherzelle,
- FIG 5: schließlich verdeutlicht Signalverläufe darin.

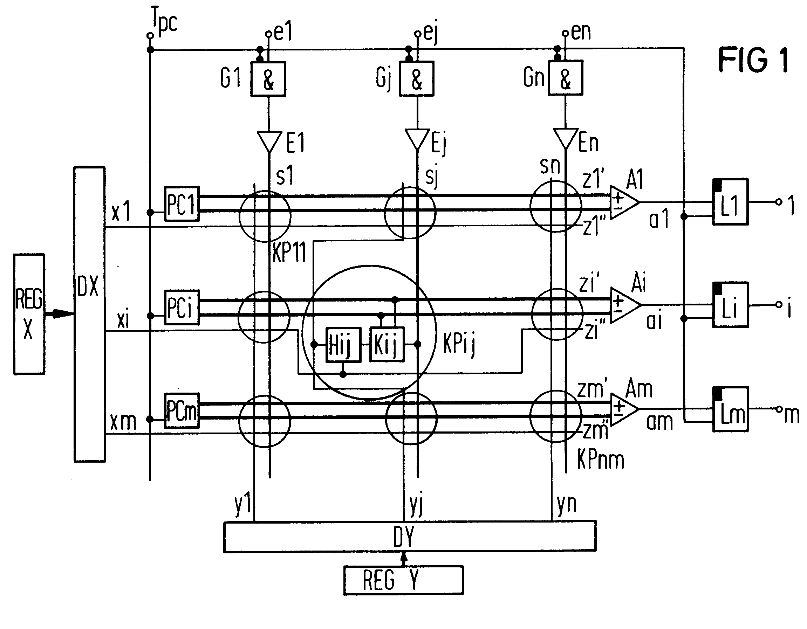

In der Zeichnung FIG 1 ist schematisch in zum Verständnis der Erfindung erforderlichem Umfange eine Breitbandsignal-Koppeleinrichtung skizziert, an deren zu (Matrix-Eingangsleitungen) Spaltenleitungen s1...sn einer Koppelpunktmatrix führenden, im Beispiel mit Eingangstreiberschaltungen E1...En versehenen Eingängen e1...en jeweils eine Torschaltung G1...Gn vorgesehen ist und deren von gedoppelten (Matrix-Ausgangsleitungen) Zeilenleitungen z1', z1''...zm′, zm'' der Koppelpunktmatrix erreichte Ausgänge a1...am mit Ausgangstreiberschaltungen A1...Am, die jeweils eine Differenzeingangsstufe aufweisen, versehen sind. Die Ausgänge al...am führen zu zeilenindividuellen Haltespeichern (Latch) L1...Lm, denen ein Taktsignal T_{PC} zugeführt wird. Haltespeicher (Latch) sind hinreichend bekannt und müssen deshalb hier nicht weiter beschrieben werden. Die matrixeingangsseitigen Torschaltung G1...Gn können wie in der FIG 1 dargestellt durch die logische UND-Funktion realisierende Gatter gegeben sein, denen jeweils über einen invertierenden Eingang ein Taktsignal T_{PC} zugeführt wird, das ebenfalls die weiter unten beschriebenen zeilenindividuellen Vorladeschaltungen PC1...PCm steuert.

Die Koppelpunktmatrix weist Koppelpunkte KP11...KPnm auf, deren Koppelelemente wie dies beim Koppelpunkt KPij für dessen Koppelelement Kij weiter ins Einzelne gehend angedeutet ist, jeweils von einer koppelpunktindividuellen Halte-Speicherzelle Hij (beim Koppelpunkt KPij) gesteuert sein können, deren Ausgang r zum Steuereingang des jeweiligen Koppelelements (Kij beim Koppelpunkt KPij) führt.

Die Halte-Speicherzellen ...Hij... werden gemäß FIG 1 durch zwei Ansteuerdecoder, nämlich einen Zeilendecoder DX und einen Spaltendecoder DY über entsprechende Ansteuerleitungen x1...xm; y1...yn in zwei Koordinaten angesteuert. Dazu mögen wie dies aus FIG 1 ersichtlich ist, die beiden Ansteuerdecoder DX, DY von Eingangsregistern Reg X, Reg Y her jeweils mit einer einer Matrixreihe (Zeile bzw. Spalte) von Koppelpunkten gemeinsamen Koppelpunktzeilen- bzw. Koppelpunktspaltenadresse beaufschlagbar sein, auf die hin sie jeweils an der der jeweiligen Koppelpunktreihen-Adresse entsprechenden Ansteuerleitung jeweils ein "1"-Ansteuersignal abgeben. Das Zusammentreffen eines Zeilenansteuersignals "1" und eines Spalteansteuersignals "1" am Kreuzungspunkt der betreffenden Matrixzeile mit der betreffenden Matrixspalte beim Aufbau einer entsprechenden Verbindung bewirkt dann eine Aktivierung der dort befindlichen Halte-Speicherzelle, beispielsweise der Speicherzelle Hij, mit der Folge, daß das von der betreffenden Halte-Speicherzelle Hij gesteuerte Koppelelement, im Beispiel das Koppelelement Kij, leitend wird.

Damit das im Beispiel betrachtete Koppelelement Kij bei einem Abbau der betreffenden Verbindung wieder gesperrt wird, wird wiederum der Ansteuerdecoder DX vom Eingangsregister Reg X mit der betreffenden Zeilenandresse beaufschlagt, so daß der Zeilendecoder DX wiederum auf seine Ausgangsleitung xi ein Zeilenansteuersignal "1" abgibt, und zugleich wird der Spaltendecoder DY von seinem Eingangsregister Reg Y her beispielsweise mit einer Leeradresse oder mit der Adresse einer Spalte von unbeschalteten Koppelpunkten beaufschlagt, so daß er auf seine Ausgangsleitung yj ein Spaltenansteuersignal "0" abgibt; das Zusammentreffen von Zeilenansteuersignal "1" und Spaltenansteuersignal "0" bewirkt dann die Rücksetzung der Halte-Speicherzelle Hij mit der Folge, daß das von ihr gesteuerte Koppelement Kij gesperrt wird.

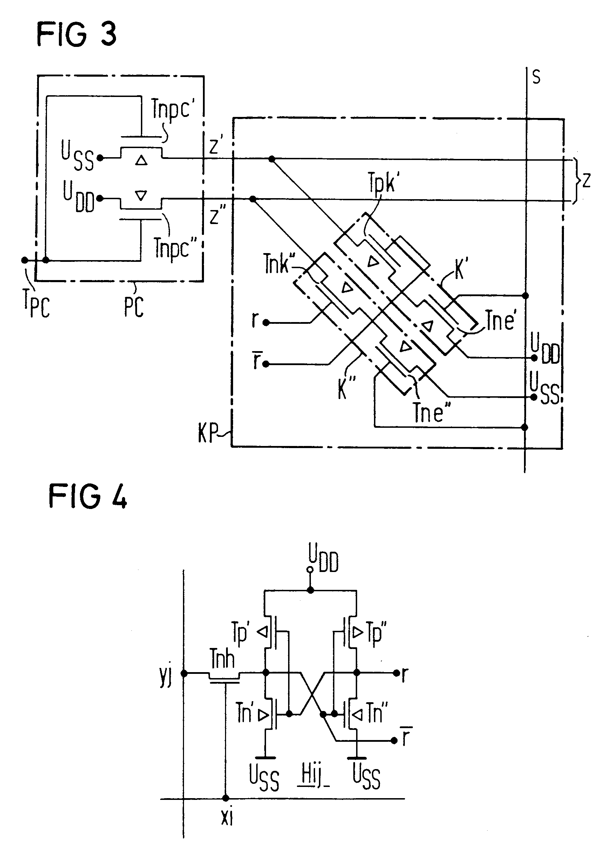

Die Halte-Speicherzellen ...Hij... können in an sich bekannter Weise ausgebildet sein; so können die Halte-Speicherzellen beispielsweise, wie dies z.B. aus EP-A-0 238 834 bekannt und in FIG 4 skizziert ist, mit einem n-Kanal-Transistor Tnh und zwei kreuzgekoppelten Inverterschaltungen (CMOS-Inverterschaltungen Tp′, Tn′; Tp˝, Tn˝) gebildet sein, wobei eine Inverterschaltung eingangsseitig mit dem zugehörigen Decoderausgang yj des einen Ansteuerdecoders über den n-Kanal-Transistor Tnh verbunden ist, der seinerseits an seiner Steuerelektrode mit dem Ausgangssignal des zugehörigen Decoderausgangs xi des anderen Ansteuerdecoders beaufschlagt ist, und wobei eine Inverterschaltung (Tp'', Tn'') ausgangsseitig das Durchschalte- bzw. Sperrsignal r abgibt, wohingegen die andere Inverterschaltung (Tp′, Tn′) ausgangsseitig das invertierte Durchschalte- bzw. Sperrsignal r̅ abgibt.

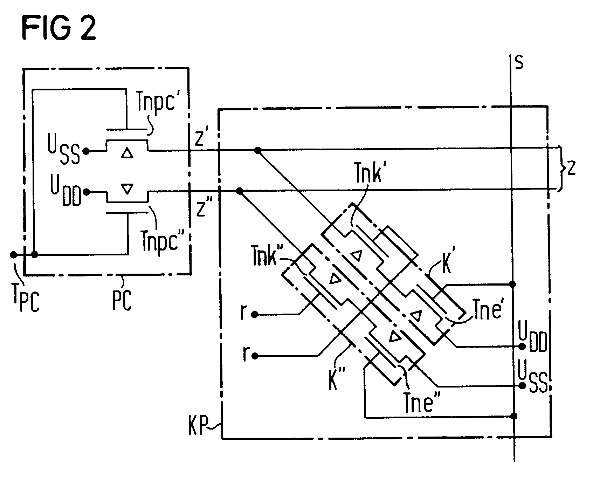

Wie die Koppelelemente K',K'' schaltungstechnisch realisiert sein können, wird in FIG 2 und FIG 3 verdeutlicht: Zunächst seien die Koppelelemente K′,K'' nach FIG 2 betrachtet. Die jeweils mit einem jeweils an der Steuerelektrode mit einem Durchschalte- bzw. Sperrsignal r beaufschlagten und mit einer Hauptelektrode an den einen bzw. den anderen Signalleiter z′, z'' der zugehörigen (Matrixausgangsleitung) Zeilenleitung z angeschlossenen Schalter-Transistoren Tnk′, Tnk'' gebildeten Koppelelemente K′,K'' weisen jeweils einen mit dem Schalter-Transistor Tnk′ bzw. Tnk'' eine Serienschaltung bildenden Eingangs-Transistor Tne′ bzw. Tne'' auf, der jeweils mit der Steuerelektrode an die zugehörige (Matrix-Eingangsleitung) Spaltenleitung s angeschlossen ist und dessen der Serienschaltung abgewandte Hauptelektrode jeweils an den einen bzw. den anderen Anschluß der Betriebsspannungsquelle U_{DD}-U_{SS} angeschlossen ist. Die Transistoren in den Koppelelementen K′,K'' nach FIG 2 sind vom gleichen, vorzugsweise vom selbstsperrenden n-Kanal-Typ.

Die Ausführungsform des Koppelelements K′ nach FIG 2 kann entsprechend FIG 3 dahingehend abgeändert werden, daß anstelle des Schalter-Transistors Tnk′ vom n-Kanal-Typ, der in Serienschaltung mit dem Eingangs-Transistor Tne′ das Koppelelement K′ bildet, das mit der der Serienschaltung abgewandten Hauptelektrode des Eingangs-Transitors Tne′ mit dem das höhere Potential aufweisenden Anschluß U_{DD} der Betriebsspannungsquelle U_{DD}-U_{SS} verbunden ist, ein Schalter-Transistor Tpk′ vom p-Kanal-Typ zum Einsatz kommt.

Um diesen Schalter-Transistor Tpk′ leitend schalten zu können, wird er mit einem, gegenüber dem für den Schalter-Transitor Tnk′ (in FIG 2) benötigten Durchschaltesignal r, invertierten Durchschaltesignal r̅ angesteuert, das zweckmäßigerweise der Verbindung der Transistoren Tp′, Tn′ der Halte-Speicherzelle H (in FIG 4) entnommen wird. Die Signalleiter z′, z'' der (Matrix-Ausgangsleitungen) Zeilenleitungen z sind mit zeilenindividuellen Vorladeschaltungen PC verbunden, über die die Signalleiter z′, z'' der (Matrix-Ausgangsleitungen) Zeilenleitungen z jeweils auf ein zwischen den beiden Betriebspotentialen liegendes Vorladepotential oder auch auf die Betriebspotentiale U_{DD}, U_{SS} selbst aufladbar sind. Eine Vorladepotentialquelle für ein zwischen den beiden Betriebspotentialen liegendes Vorladepotential kann insbesondere in prinzipiell (z.B. aus EP-A-0 249 837) bekannter Weise mit einem rückgekoppelten CMOS-Inverter gebildet sein, über den jeweils in einer Vorladephase einer Bit-Durchschaltezeitspanne die Matrix-Ausgangsleitung zumindest angenähert auf das der Schaltschwelle des Inverters entsprechende Potential geladen wird.
Demgegenüber sind in den in FIG 2 und FIG 3 dargestellten Ausführungsbeispielen die Signalleiter z′, z'' der (Matrix-Ausgangsleitung) Zeilenleitung z jeweils über einen Vorladetransistor Tnpc′ , Tnpc'' vom selbstsperrenden n-Kanal-Typ mit jeweils einem anderen Anschluß der Betriebsspannungsquelle U_{DD}-U_{SS} verbunden. Die Steuerelektroden der Vorlade-Transistoren Tnpc′, Tnpc˝ sind jeweils mit einer das Taktsignal T_{PC} führenden Leitung verbunden.

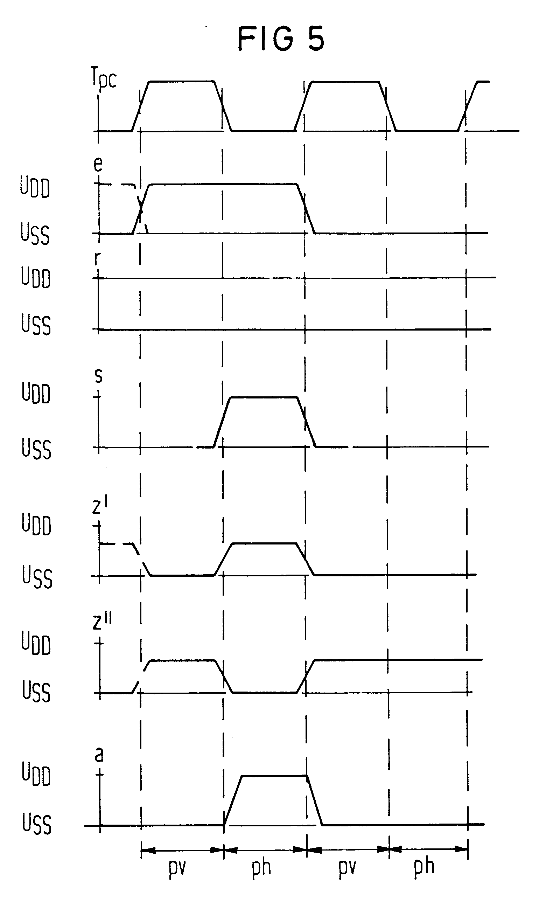

Die Ausgangstreiberschaltungen Al...Am in FIG 1 können beispielsweise durch Differenzverstärker mit Kippverhalten gegeben sein, die mit jeweils einem sogenannten gated-flip-flop realisiert werden, wie es im Prinzip (aus |a| IEEE Journal of Solid-State Circuits, Oct.1973, 319...323, Fig.6) und auch schon in verschiedenen Modifikationen (beispielsweise aus |b| DE-OS 24 22 136, Fig.3 (16′) und aus |c| DE-OS 26 08 119, Fig.5) bekannt ist, wobei ein dort vorgesehener Symmetriertransistor (in |a| und |b|) ebenso wie dort vorgesehene Vorladetransistoren (in |b|) bzw. Lasttransistoren (in |c| ) zweckmäßigerweise als p-Kanal-Transistor auszubilden ist.
Werden die Signalleiter z′, z'' der (Matrix-Ausgangsleitungen) Zeilenleitungen z in der Vorladephase pv, wie weiter unten noch näher beschrieben werden wird, zumindest angenähert jeweils auf ein anderes Potential der Betriebsspannungsquelle U_{DD}-U_{SS} aufgeladen, so genügt als Ausgangstreiberschaltung A ein Differenzverstärker, wie er beispielsweise durch einen Operationsverstärker gegeben sein kann, der dann vorzugsweise in FET-Technik ausgeführt wird.

Die in FIG 1 als Differenzverstärker dargestellten Ausgangstreiberschaltungen A1...Am sind jeweils mit ihrem nichtinvertierenden Eingang (+) mit dem Signalleiter z′ und mit ihrem invertierenden Eingang (-) mit dem Signalleiter z'' der jeweiligen (Matrix-Ausgangsleitungen) Zeilenleitung z verbunden. Bei dieser Anschlußweise erhält man die in FIG 5, Zeile a dargestellte Phasenlage des Ausgangssignals a.
In FIG 5 ist für zwei aufeinanderfolgende Bit-Durchschaltezeitspannen die Übertragung eines "HIGH"-Signals und anschließend eines "LOW"-Signals (vgl. Zeile e) beispielsweise von einem Eingang ej (in FIG 1) zu einem Ausgang ai (in FIG 1) der Koppelpunktmatrix (FIG 1) dargestellt: Durch ein entsprechendes, die Steuerelektroden jedes Vorladetransistors Tnpc′, Tnpc'' (in FIG 2 und FIG 3) beaufschlagendes (im Beispiel "HIGH"-Signal) Taktsignal T_{PC} (Zeile T_{PC} in FIG 5) wird bewirkt, daß in jeder Vorladephase pv (in FIG 5 unten) einer durch das Taktsignal T_{PC} in eine solche Vorladephase pv und eine nachfolgende Hauptphase ph (in FIG 5 unten) unterteilten Bit-Durchschalteperiode jeder Vorladetransistor Tnpc′, Tnpc'' leitend ist, so daß während der Vorladephase pv die Signalleiter z′, z'' der (Matrix-Ausgangsleitungen) Zeilenleitungen z jeweils auf ein zwischen den Betriebspotentialen U_{DD}, U_{SS} liegendes oder auch auf ein Betriebspotential U_{DD}, U_{SS} selbst aufgeladen werden. So werden in den Ausführungsbeispielen gemäß FIG 2 und FIG 3 in der Vorladephase pv die Signalleiter z′ der jeweiligen (Matrix-Ausgangsleitung) Zeilenleitung z zum niedrigen Potential (U_{SS}, Masse) der Betriebsspannungsquelle U_{DD}-U_{SS} entladen (vgl. FIG 5, Zeile z′), wohingegen die Signalleiter z'' der jeweiligen (Matrix-Ausgangsleitung) Zeilenleitung z vom hohen Potential U_{DD} der Betriebsspannungsquelle U_{DD}-U_{SS} aufgeladen werden (vgl. FIG 5, Zeile z''). Dadurch, daß die Vorlade-Transistoren Tnpc'' bezüglich des jeweiligen Signalleiters z'' in Source-Folger-Schaltung arbeiten, werden die Signalleiter z'' auf ein Potential aufgeladen, das gegenüber dem hohen Potential U_{DD} der Betriebsspannungsquelle U_{DD}-U_{SS} um die Schwellenspannung zwischen der Steuerelektrode und der mit dem Signalleiter z'' verbundenen Hauptelektrode des jeweiligen Vorlade-Transistors Tnpc'' vermindert ist.

In der darauffolgenden Hauptphase ph (siehe FIG 5, unten) werden im Beispiel durch ein "LOW"-Taktsignal T_{PC} (siehe FIG 5, Zeile T_{PC}) die Vorlade-Transistoren Tnpc′, Tnpc'' (in FIG 2 und FIG 3) gesperrt, gleichzeitig werden die matrixeingangsseitigen Torschaltungen G1...Gn (in FIG 1) entriegelt. Dadurch werden die an den Eingangsleitungen e1...en der Koppelpunktmatrix anliegenden Signale über die jeweiligen Eingangstreiberschaltungen E1...En auf die jeweiligen (Matrix-Eingangsleitungen) Spaltenleitungen s durchgeschaltet (vgl. FIG 5, Zeilen e, s).
Befindet sich eine (Matrix-Eingangsleitung) Spaltenleitung s im "LOW"-Zustand, so bleiben sämtliche über ihre Steuerelektrode mit dieser Spaltenleitung s verbundenen Eingangs-Transistoren Tne′, Tne'' (in FIG 2 bzw. in FIG 3) gesperrt, wohingegen die vorgenannten Eingangs-Transistoren Tne′,Tne'' durch ein "HIGH"-Signal auf der zugehörigen Spaltenleitung s in den leitenden Zustand versetzt werden.
Befindet sich nun ein Koppelpunkt KP aufgrund jeweils eines an den jeweiligen Steuerelektroden der Schalter-Transistoren Tnk′, bzw. Tpk′, Tnk'' anliegenden zum Leitendschalten der Schalter-Transistoren Tnk′ bzw. Tpk′, Tnk'' geeigneten Durchschaltesignals r (in FIG 2 "HIGH"-Signal für Tnk′ und Tnk''; in FIG 3 "HIGH"-Signal für Tnk'' und "LOW"-Signal für Tpk′) im Durchschaltezustand (vgl. FIG 5 Zeile r) und führt die zugehörige (Matrix-Eingangsleitung) Spaltenleitung s ein "HIGH"-Signal (vgl. FIG 5, Zeile s), so wird der Signalleiter z'' der betreffenden (Matrix-Ausgangsleitung) Zeilenleitung z zum niedrigen Potential U_{SS} der Betriebsspannungsquelle U_{DD}-U_{SS} entladen (vgl. FIG 5, Zeile z''), wohingegen der Signalleiter z′ der betreffenden (Matrix-Ausgangsleitung) Zeilenleitung z vom hohen Potential U_{DD} der Betriebsspannungsquelle U_{DD}-U_{SS} aufgeladen wird (vgl. FIG 5, Zeile z′). Dadurch, daß die jeweiligen Eingangs-Transistoren Tne′ bezüglich des jeweiligen Signalleiters z′ in Source-Folger-Schaltung arbeiten, wird der betreffende Signalleiter z′ auf ein Potential aufgeladen, das gegenüber dem hohen Potential U_{DD} der Betriebsspannungsquelle U_{DD}-U_{SS} wenigstens um die Schwellenspannung zwischen der Steuerelektrode und der der Serienschaltung aus Eingangs-Transistor Tne′ und Schalterstransistor Tnk′ bzw. Tpk′ zugewandten Hauptelektrode des betreffenden Eingangs-Transistors Tne′ vermindert ist.

Am Eingang der Ausgangstreiberschaltung a, die mit den jeweiligen Signalleitern z′, z'' der betrachteten (Matrix-Ausgangsleitung) Zeilenleitung z verbunden ist, erfolgt durch die obenbeschriebene Umladung der Signalleiter z′, z'' eine Polaritätsumkehr der Spannungsdifferenz, die von der Ausgangstreiberschaltung verstärkt wird und zu einem steilen Signalwechsel am Ausgang der Ausgangstreiberschaltung A führt (vgl. FIG 5, Zeile a).
Ein auf der betreffenden (Matrix-Eingangsleitung) Spaltenleitung s anliegendes Signal wird also über den jeweiligen über die Schaltertransistoren Tnk′ bzw. Tpk′, Tnk'' entriegelten Koppelpunkt KP vorzeichengleich durchgeschaltet (vgl. FIG 5, Zeilen s, a). Zum Ende der Hauptphase ph wird das am Ausgang a der Ausgangstreiberschaltung A anstehende "HIGH"-Signal (vgl. FIG 5, Zeile a) beispielsweise mit dem vom "LOW"-Zustand in den "HIGH"-Zustand führenden Signalwechsel des Taktsignals T_{PC} in den zugehörigen Halte-Speicher (Latch) L übernommen.
In der nachfolgenden Bit-Durchschaltzeitspanne möge nun gemäß FIG 5 über die betrachtete Eingangsleitung ej ein "LOW"-Signal übertragen werden. In der Vorladephase pv werden zunächst wieder sämtliche Signalleiter z′, z'' der (Matrix-Ausgangsleitungen) Zeilenleitungen z vorgeladen. In der sich anschließenden Hauptphase ph mögen die Schalter-Transistoren Tnk′ bzw. Tpk′, Tnk'' wiederum im Durchschaltezustand sein. Da an der Eingangsleitung ej ein "LOW"-Signal ansteht (vgl. FIG 5, Zeile e), bleibt die zugehörige (Matrix-Eingangsleitung) Spaltenleitung sj ebenfalls im "LOW"-Zustand mit der Folge, daß sämtliche mit dieser Spaltenleitung sj verbundenen Eingangs-Transistoren Tne′, Tne'' gesperrt bleiben, die zugehörigen Signalleiter z′, z'' der (Matrix-Ausgangsleitung) Zeilenleitung z nicht umgeladen werden und somit der Signalzustand auf dieser Ausgangsleitung a erhalten bleibt (vgl. FIG 5, Zeile a), vorausgesetzt, daß kein anderer mit dieser (Matrix-Ausgangsleitung) Zeilenleitung z verbundener Koppelpunkt KP leitendgeschaltet wurde; zum Ende dieser Hauptphase ph wird daher ein "LOW"-Signal in den zugehörigen Haltespeicher (Latch) L übernommen.

Wie aus FIG 5 Zeilen z′, z'' ersichtlich, arbeiten die Signalleiter z′, z'' der (Matrix-Ausgangsleitungen) Zeilenleitungen z mit gegenüber der Betriebsspannung U_{DD}-U_{SS} verringertem Signalhub, woraus sich eine Reduzierung der Umladeverluste auf den (Matrix-Ausgangsleitungen) Zeilenleitungen z ergibt.

## Patentansprüche

1. Breitbandsignal-Koppeleinrichtung mit einer Koppelpunktmatrix in FET-Technik, deren jeweils mit einem Signalleiter (s) gebildete Matrix-Eingangsleitungen über jeweils mit zwei Koppelelementen (K′,K'') gebildete Koppelpunkte (KP) mit jeweils mit zwei Signalleitern (z′, z'') gebildeten Matrixausgangsleitungen (z) verbindbar sind, an deren beiden Signalleiter (z′, z'') jeweils die beiden Signaleingänge einer mit einem Differenzverstärker gebildeten Ausgangsverstärkerschaltung (A) angeschlossen sind, wobei die Koppelelemente (K′,K'') jeweils mit einem an der Steuerelektrode mit einem Durchschalte- bzw. Sperrsignal (r) beaufschlagten und mit einer Hauptelektrode an den einen bzw. anderen Signalleiter (z′, z'') der zugehörigen Matrixausgangsleitung (z) angeschlossenen Schaltertransistoren (Tnk′ bzw. Tpk′, Tnk'') und einem mit dem Schaltertransistor (Tnk′ bzw. Tpk′, Tnk'') eine Serienschaltung bildenden Eingangs-Transistor (Tne′, Tne'') gebildet sind, der mit der Steuerelektrode an den Signalleiter (s) der zugehörigen Matrix-Eingangsleitung angeschlossen ist und dessen der Serienschaltung abgewandte Hauptelektrode mit einem Anschluß der Betriebsspannungsquelle (U_{DD}-U_{SS}) verbunden ist, und wobei die Signalleiter (z′, z'') der jeweiligen Matrix-Ausgangsleitung (z) jeweils über einen Vorladetransistor (Tnpc′, Tnpc''), der an seiner Steuerelektrode mit einem eine Bit-Durchschaltezeitspanne in eine Vorladephase (pv) und eine eigentliche Durchschaltephase (ph) unterteilenden Taktsignal (T_{PC}) beaufschlagt wird, jeweils mit einem Anschluß der Betriebsspannungsquelle (U_{DD}-U_{SS}) verbindbar sind, so daß in jeder Vorladephase (pv) die Signalleiter (z′, z'') der Matrix-Ausgangsleitung (z) über die jeweiligen Vorladetransistoren (Tnpc′, Tnpc'') auf ein zwischen den Potentialen der Betriebsspannungsquelle (U_{DD}-U_{SS}) liegendes Vorladepotential oder auch auf eines der Betriebspotentiale (U_{DD}, U_{SS}) selbst aufladbar sind,
**dadurch gekennzeichnet,**
daß die der Serienschaltung abgewandte Hauptelektrode des Eingangstransistors (Tne′) des mit dem einen Signalleiter (z′) verbundenen Koppelelementes (K′) mit dem das hohe Potential aufweisenden Anschluß (U_{DD}) der Betriebsspannungsquelle (U_{DD}-U_{SS}) verbindbar ist und die der Serienschaltung abgewandte Hauptelektrode des Eingangsstransistors (Tne'') des mit dem anderen Signalleiter (z'') verbundenen Koppelelementes (K'') mit dem das niedrige Potential aufweisenden Anschluß (U_{SS}) der Betriebsspannungsquelle (U_{DD}-U_{SS}) verbindbar ist.

2. Breitband-Koppeleinrichtung nach Anspruch 1,
**dadurch gekennzeichnet,**
daß die Transistoren der Koppelelemente (K′,K'') vom gleichen Typ sind.

3. Breitband-Koppeleinrichtung nach Anspruch 2,
**dadurch gekennzeichnet,**
daß die Transistoren der Koppelelemente (K′,K'') vom n-Kanal-Typ sind.

4. Breitband-Koppeleinrichtung nach Anspruch 1,
**dadurch gekennzeichnet,**
daß der Schalter-Transistor (Tpk′) des einen Koppelelementes (K), das mit dem das hohe Potential aufweisenden Anschluß (U_{DD}) der Betriebsspannungsquelle (U_{DD}-U_{SS}) verbunden ist, vom p-Kanal-Typ ist und die übrigen Transistoren der Koppelelemente (K′,K'') vom n-Kanal-Typ sind.

5. Breitband-Koppeleinrichtung nach einem der vorstehenden Ansprüche,
**dadurch gekennzeichnet,**
daß der genannte eine Signalleiter (z′) der jeweiligen Matrix-Ausgangsleitung (z) über den zugehörigen Vorladetransistor (Tnpc′) mit dem das niedrige Potential aufweisenden Anschluß (U_{SS}) der Betriebsspannungsquelle (U_{DD}-U_{SS}) verbindbar ist und der genannte andere Signalleiter (z'') der jeweiligen Matrix-Ausgangsleitung (z) über den zugehörigen Vorladetransistor (Tnpc'') mit dem das hohe Potential aufweisenden Anschluß (U_{DD}) der Betriebsspannungsquelle (U_{DD}-U_{SS}) verbindbar ist.

6. Breitband-Koppeleinrichtung nach Anspruch 5,
**dadurch gekennzeichnet,**
daß die Vorladetransistoren (Tnpc′, Tnpc'') vom n-Kanal-Typ sind und an ihren Steuerelektroden mit dem Taktsignal (T_{PC}) beaufschlagt werden.

## Claims

1. Broadband signal switching network having a crosspoint matrix in FET technology, the matrix input lines of which, formed by a signal conductor (s) in each case, can be connected via crosspoints (KP) formed by two switching elements (K', K'') in each case to matrix output lines (z) formed by two signal conductors (z', z'') in each case, the two signal inputs of an output amplifier circuit (A) formed by a differential amplifier being connected in each case to the two signal conductors (z', z'') of said matrix output lines, in which the switching elements (K', K'') are formed in each case by switching transistors (Tnk' or Tpk' respectively, Tnk'') which receive a through-connect signal or inhibit signal (r) at the control electrode and are connected by a main electrode to the one or other signal conductor (z', z'') of the associated matrix output line (z) and by an input transistor (Tne', Tne'') forming a series circuit with the switching transistor (Tnk' or Tpk'' respectively, Tnk''), which input transistor is connected by the control electrode to the signal conductor (s) of the associated matrix input line, and the main electrode of said input transistor remote from the series circuit is connected to one terminal of the operating voltage source (U_{DD}-U_{SS}), and in which the signal conductors (z', z'') of the respective matrix output line (z) can be connected to one terminal of the operating voltage source (U_{DD}-U_{SS}) in each case via a precharging transistor (Tnpc', Tnpc'') in each case, which receives at its control electrode a clock signal (T_{PC}) dividing a bit through-connection period into a precharging phase (pv) and an actual through-connection phase (ph), so that in every precharging phase (pv) the signal conductors (z', z'') of the matrix output line (z) can be charged via the respective precharging transistors (Tnpc', Tnpc'') to a precharging potential lying between the potentials of the operating voltage source (U_{DD}-U_{SS}) or else to one of the operating potentials (U_{DD}, U_{SS}) itself,
characterized in that the main electrode, remote from the series circuit, of the input transistor (Tne') of the switching element (K') connected to the one signal conductor (z') can be connected to the terminal (U_{DD}) of the operating voltage source (U_{DD}-U_{SS}) having the high potential, end the main electrode, remote from the series circuit, of the input transistor (Tne'') of the switching element (K'') connected to the other signal conductor (z'') can be connected to the terminal (U_{SS}) of the operating voltage source (U_{DD}-U_{SS}) having the low potential.

2. Broadband switching network according to Claim 1,
characterized in that the transistors of the switching elements (K', K'') are of the same type.

3. Broadband switching network according to Claim 2,
characterized in that the transistors of the switching elements (K', K'') are of the n-channel type.

4. Broadband switching network according to Claim 1,
characterized in that the switching transistor (Tpk') of the one switching element (K) which is connected to the terminal (U_{DD}) of the operating voltage source (U_{DD}-U_{SS}) having the high potential is of the p-channel type and the other transistors of the switching elements (K', K'') are of the n-channel type.

5. Broadband switching network according to one of the preceding claims, characterized in that the aforesaid one signal conductor (z') of the respective matrix output line (z) can be connected via the associated precharging transistor (Tnpc') to the terminal (U_{SS}) of the operating voltage source (U_{DD}-U_{SS}) having the low potential, and the aforesaid other signal conductor (z'') of the respective matrix output line (z) can be connected via the associated precharging transistor (Tnpc'') to the terminal (U_{DD}) of the operating voltage source (U_{DD}-U_{SS}) having the high potential.

6. Broadband switching network according to Claim 5,
characterized in that the precharging transistors (Tnpc', Tnpc'') are of the n-channel type and receive the clock signal (T_{PC}) at their control electrodes.

## Revendications

1. Dispositif de couplage de signaux à large bande, comportant une matrice de points de couplage en technique FET, dont les lignes d'entrée de la matrice, formées par un conducteur de signaux (s) sont susceptibles d'être reliées, par l'intermédiaire de points de couplage (KP) formés par deux éléments de couplage (K', K''), à des lignes (z) de sortie de la matrice qui sont formées de deux conducteurs de signaux (z', z'') et aux deux conducteurs de signaux (z', z'') desquelles sont reliées les deux entrées de signaux d'un circuit amplificateur de sortie (A) formé par un amplificateur différentiel, du type dans lequel les éléments de couplage (K', K'') sont respectivement formés par un transistor de commutation (Tnk' ou Tpk', Tnk''), qui est chargé, au niveau de l'électrode de commande, par un signal d'interconnexion ou de blocage (r) et qui est relié, par une électrode principale, au premier ou au deuxième conducteur de signaux (z', z'') de la ligne (z) de sortie de la matrice associée, et par un transistor d'entrée (Tne', Tne''), qui forme un circuit série, avec le transistor de commutation (Tnk' ou Tpk', Tnk''), qui est relié, par l'électrode de commande au conducteur de signaux (s) de la ligne d'entrée de la matrice associée, et dont l'électrode principale, tournée à l'opposé du circuit série, est reliée à une borne de la source de tension de service (U_{DD}-U_{SS}), et du type dans lequel les conducteurs de signaux (z', z'') de la ligne (z) de sortie de la matrice respective sont susceptibles d'être reliés à une borne de la source de tension de service (U_{DD}-U_{SS}), par l'intermédiaire d'un transistor de précharge (Tnpc', Tnpc'') qui est chargé, au niveau de son électrode de commande, par un signal de cadence (T_{PC}) subdivisant un instant d'interconnexion par bit en une phase de précharge (pv) et en une phase d'interconnexion (ph) proprement dite, en sorte que dans chaque phase de précharge (pv), les conducteurs de signaux (z', z'') de la ligne (z) de sortie de la matrice sont susceptibles d'être chargés, automatiquement et par l'intermédiaire des transistors de précharge respectifs (Tnpc', Tnpc''), à un potentiel de précharge situé entre les potentiels de la source de tension de service (U_{DD}-U_{SS}) ou également à un des potentiels de service (U_{DD}, U_{SS}),
caractérisé en ce que l'électrode principale, tournée à l'opposé du circuit série, du transistor d'entrée (Tne') de l'élément de couplage (K') relié à l'un des conducteurs de signaux (z'), est susceptible d'être reliée à la borne (U_{DD}) de la source de tension de service (U_{DD}-U_{SS}) présentant le potentiel haut, et l'électrode principale, tournée à l'opposé du circuit série, du transistor d'entrée (Tne'') de l'élément de couplage (K'') relié à l'autre conducteur de signaux (z''), est susceptible d'être reliée à la borne (U_{SS}) de la source de tension de service (U_{DD}-U_{SS}) présentant le potentiel bas.

2. Dispositif de couplage de signaux à large bande suivant la revendication 1,
caractérisé en ce que les transistors des éléments de couplage (K', K'') sont du même type.

3. Dispositif de couplage de signaux à large bande suivant la revendication 2,
caractérisé en ce que les transistors des éléments de couplage (K', K'') sont de type à canal n.

4. Dispositif de couplage de signaux à large bande suivant la revendication 1,
caractérisé en ce que le transistor de commutation (Tpk') du premier élément de couplage (K), qui est relié à la borne (U_{DD}) de la source de tension de service (U_{DD}-U_{SS}) présentant le potentiel haut, est du type à canal p et les autres transistors des éléments de couplage (K', K'') sont du type à canal n.

5. Dispositif de couplage de signaux à large bande suivant l'une des revendications précédentes
caractérisé en ce que ledit premier conducteur de signaux (z') de la ligne (z) de sortie de la matrice associée est susceptible d'être relié, par l'intermédiaire du transistor de précharge (Tnpc') associé, à la borne (U_{SS}) de la source de tension de service (U_{DD}-U_{SS}) présentant le potentiel bas et ledit autre conducteur de signaux (z'') de la ligne (z) de sortie de la matrice respective est susceptible d'être relié, par l'intermédiaire du transistor de précharge associé (Tnpc''), à la borne (U_{DD}) de la source de tension de service (U_{DD}-U_{SS}) présentant le potentiel haut.

6. Dispositif de couplage de signaux à large bande suivant la revendication 5, caractérisé en ce que les transistors de précharge (Tnpc', Tnpc'') sont du type à canal n et sont chargés, au niveau de leur électrode de commande, par le signal de cadence (T_{PC}).
